# FASCICULE DE BREVET EUROPEEN

(11) **EP 2 429 363 B1**
(45) Date de publication et mention de la délivrance du brevet: **03.04.2013**
(21) Numéro de dépôt: 10727106.6
(22) Date de dépôt: 05.05.2010
(51) Int. Cl.: A47J 43/07, A47J 43/044, A47J 31/00

(54) **APPAREIL DE PREPARATION CULINAIRE COMPACT, NOTAMMENT APPAREIL POUR LA REALISATION DE LAIT DE SOJA**
KOMPAKTES KOCHGERÄT, IM BESONDEREN ZUR HERSTELLUNG VON SOJAMILCH
COMPACT CULINARY PREPARATION APPLIANCE, IN PARTICULAR FOR MAKING SOY MILK

(30) Priorité: 07.05.2009 FR 0902229
(43) Date de publication de la demande: 21.03.2012
(73) Titulaire: SEB S.A., 69130 Ecully (FR)
(72) Inventeur: PERRIER, Matthieu, F-65310 Laloubere (FR)
(74) Mandataire: Cémeli, Eric Philippe Laurent
(86) Numéro de dépôt international: PCT/FR2010/050864
(87) Numéro de publication internationale: WO 2010/128255

(56) Documents cités:
- WO-A-2006/070980
- CN-A- 101 305 889
- CN-Y- 201 174 961
- CN-Y- 201 178 673
- JP-A- 2006 094 882

## Description

La présente invention concerne le domaine technique des appareils de préparation culinaire prévus pour le broyage en milieu liquide, notamment pour la réalisation de lait de soja.

La présente invention concerne plus particulièrement les appareils comportant un outil de travail rotatif issu d'un bloc moteur supérieur disposé sur un récipient de travail.

Le document CN 101305889 divulgue un appareil du type précité, dans lequel l'outil de travail rotatif est entouré par une série de lames verticales. Ces lames verticales sont montées sur une base disposée sur le fond du récipient de travail. Ces lames verticales sont également reliées par un anneau supérieur. La partie inférieure du bloc moteur est entourée par l'anneau supérieur. Ainsi un élément séparateur est monté dans le récipient de travail. Les lames verticales permettent de retenir les graines de soja à l'intérieur de l'élément séparateur au début de leur broyage. L'utilisateur doit toutefois verser les graines de soja à l'intérieur de l'élément séparateur. Les lames verticales perturbent la circulation du liquide mis en mouvement par l'outil de travail rotatif. L'élément séparateur doit être retiré du récipient de travail pour un nettoyage efficace. La taille du récipient de travail reste importante.

Un objet de la présente invention est de proposer un appareil du type précité, dans lequel l'efficacité du broyage des graines de soja lors de la préparation de lait de soja est améliorée.

Un autre objet de la présente invention est de simplifier l'utilisation d'un appareil à lait de soja.

Un autre objet de la présente invention est de simplifier la construction d'un appareil à lait de soja.

Un autre objet de la présente invention est de simplifier le nettoyage d'un appareil à lait de soja.

Un autre objet de la présente invention est d'améliorer la compacité d'un appareil à lait de soja.

Ces objets sont atteints avec un appareil de préparation culinaire, notamment un appareil pour la réalisation de lait de soja, comportant un bloc moteur disposé sur un récipient de travail présentant un fond et une paroi latérale, un outil de travail rotatif étant monté sur un axe issu d'une partie inférieure du bloc moteur, l'outil de travail rotatif comportant des lames entourées par une série de déflecteurs agencés sur le fond du récipient de travail, des passages latéraux étant ménagés entre les déflecteurs, du fait que les déflecteurs présentent des sommets ménageant un passage supérieur avec la partie inférieure du bloc moteur et que l'outil de travail rotatif comporte d'autres lames inclinées vers le haut à partir de l'axe, lesdites autres lames s'étendant au moins partiellement au dessus des sommets des déflecteurs. Ainsi l'utilisateur peut verser les ingrédients à broyer et/ou mélanger dans le récipient de travail, sans contrainte particulière. Les lames entourées par la série de déflecteurs broyent et propulsent les aliments vers les déflecteurs, les morceaux d'aliments les plus gros ayant tendance à être bloqués par les déflecteurs. Les autres lames aspirent la préparation vers les lames entourées par la série de déflecteurs. Un mouvement toroïdal efficace peut ainsi être mis en oeuvre à l'intérieur du récipient de travail. La hauteur du récipient de travail peut être réduite, le nettoyage du récipient de travail est facilité.

Selon un mode de réalisation avantageux, les déflecteurs sont issus du fond du récipient de travail. Cette disposition permet de simplifier la construction et de faciliter le nettoyage du récipient de travail.

Avantageusement, les déflecteurs entourent une partie concave du fond du récipient de travail. Cette disposition permet d'améliorer le recyclage de la préparation dans le récipient de travail.

Avantageusement encore, le fond du récipient de travail est concave et présente une courbure raccordée à la paroi latérale du récipient de travail. Cette disposition permet d'améliorer encore le recyclage de la préparation dans le récipient de travail.

Avantageusement encore, la série de déflecteurs comporte entre trois et seize déflecteurs.

Avantageusement encore, chacun des déflecteurs présente un bord d'attaque latéral. Cette disposition permet de mieux séparer les petits morceaux d'aliments pouvant s'échapper par les passages latéraux, des morceaux d'aliments plus gros.

Avantageusement encore, les déflecteurs présentent chacun une section augmentant à partir du bord d'attaque latéral. Cette disposition permet d'accélerer le flux liquide passant par les passages latéraux.

Avantageusement encore, la série de déflecteurs est entourée par une série d'autres déflecteurs et d'autres passages latéraux sont ménagés entre les autres déflecteurs. Cette disposition permet d'améliorer encore le mélange de la préparation.

Avantageusement alors, les autres déflecteurs sont issus du fond du récipient de travail. Cette disposition permet de simplifier la construction et de faciliter le nettoyage du récipient de travail.

Avantageusement encore, chacun des autres déflecteurs présente un bord d'attaque interne. Cette disposition permet d'améliorer encore le mélange de la préparation.

Avantageusement alors, les bords d'attaque internes des autres déflecteurs sont agencés en regard des passages latéraux. Cette disposition permet d'améliorer encore le mélange de la préparation.

Avantageusement encore, la série d'autres déflecteurs comporte entre trois et seize autres déflecteurs.

Avantageusement encore, le nombre de déflecteurs est identique au nombre d'autres déflecteurs.

Selon un mode de réalisation avantageux, l'outil de travail rotatif est non coupant. Cette disposition permet d'améliorer la sécurité d'utilisation de l'appareil.

Selon un mode de réalisation, le récipient de travail comporte un bec verseur. Cette disposition permet d'améliorer l'utilisation de l'appareil.

Avantageusement encore, la partie inférieure du bloc moteur s'étend dans le récipient de travail à distance de la paroi latérale du récipient de travail. Cette disposition permet de faciliter le mélange de la préparation et aussi d'augmenter la capacité du récipient de travail et/ou d'améliorer la compacité de l'appareil.

Avantageusement alors, la partie inférieure du bloc moteur présente une nervure latérale s'étendant dans le récipient de travail à distance de la paroi latérale du récipient de travail. Cette disposition permet d'améliorer le mélange de la préparation.

Avantageusement alors, la nervure latérale est agencée en amont du bec verseur par rapport au sens de rotation de l'outil de travail rotatif. Cette disposition permet de prévenir le débordement de la préparation par le bec verseur.

Selon un mode de réalisation préféré, l'appareil comporte des moyens de chauffe.

Avantageusement alors, les moyens de chauffe sont formés par un élément chauffant plongeant issu de la partie inférieure du bloc moteur supérieur, une telle construction étant usuelle pour ce type d'appareil.

L'invention sera mieux comprise à l'étude d'un exemple de réalisation, pris à titre nullement limitatif, illustré dans les figures annexées, dans lesquelles :
- la figure 1 est une vue en perspective d'un bloc moteur d'un appareil selon l'invention,
- la figure 2 est une vue en perspective d'un récipient de travail d'un appareil selon l'invention,
- la figure 3 est une vue de dessus du récipient de travail illustré sur la figure 2,
- la figure 4 est une vue en perspective du récipient de travail illustré sur les figures 2 et 3,
- la figure 5 est une vue partielle en coupe et en perspective de l'appareil selon l'invention comportant le bloc moteur illustré sur la figure 1 et le récipient de travail illustré sur les figures 2 à 4,
- la figure 6 est une vue partielle en coupe et en élévation de l'appareil selon l'invention comportant le bloc moteur illustré sur la figure 1 et le récipient de travail illustré sur les figures 2 à 4.

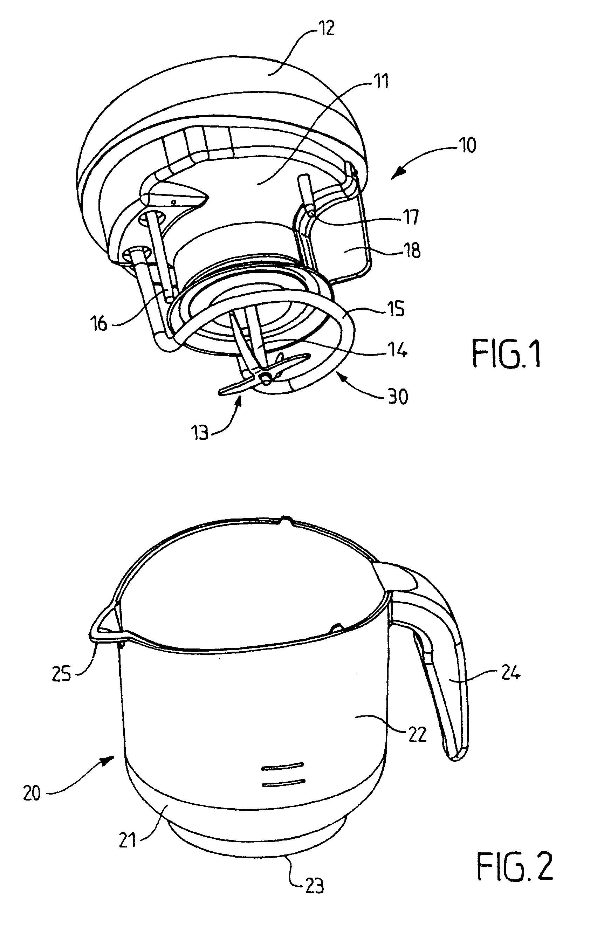

L'appareil de préparation culinaire illustré sur les figures 1 à 6 est notamment un appareil pour la préparation de lait de soja. Cet appareil comporte un bloc moteur 10 illustré sur la figure 1, disposé sur un récipient de travail 20 illustré sur les figures 2 à 4.

Le bloc moteur 10 comporte une partie inférieure 11 prévue pour reposer sur le récipient de travail 20, et une partie supérieure 12 portant avantageusement des organes de commande de l'appareil (non représentés sur les figures). Un moteur (non représenté aux figures) est logé dans le bloc moteur 10. Un outil de travail rotatif 13 est monté sur un axe 14 issu de la partie inférieure 11 du bloc moteur 10. De préférence, l'outil de travail rotatif 13 est non coupant.

Selon un mode de réalisation préféré, l'appareil de préparation culinaire comporte des moyens de chauffe 30.

Tel qu'illustré sur les figures 1, 5 et 6, les moyens de chauffe 30 sont formés par un élément chauffant plongeant 15 issu de la partie inférieure 11 du bloc moteur 10.

L'appareil comporte également une sonde longue 16 contenant un capteur de température et une sonde courte 17 comportant un capteur de détection de mousse.

Le récipient de travail 20 représenté sur les figures 2 à 6 présente un fond 21 et une paroi latérale 22. Un moyen d'appui 23 est disposé sous le fond 21. Une poignée 24 est issue de la paroi latérale 22. Le récipient de travail 20 comporte un bec verseur 25. Le récipient de travail 20 peut notamment être réalisé en matière plastique.

L'appareil de préparation culinaire comporte une série de déflecteurs 40. Les déflecteurs 40 sont agencés sur le fond 21 du récipient de travail 20. Des passages latéraux 41 sont ménagés entre les déflecteurs 40.

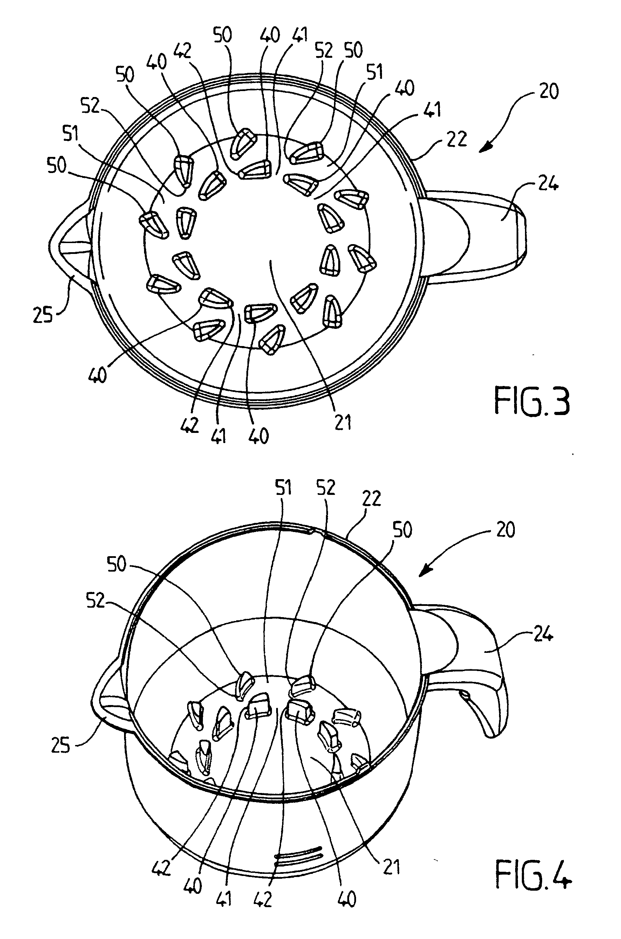

Tel que représenté sur les figures 3 à 6, la série de déflecteurs 40 comporte dix déflecteurs 40. Les déflecteurs 40 sont équidistants et de forme identique. Chacun des déflecteurs 40 présente un bord d'attaque latéral 42. Les déflecteurs 40 présentent chacun une section augmentant à partir du bord d'attaque latéral 42. Les déflecteurs 40 sont non coupants.

Les déflecteurs 40 sont issus du fond 21 du récipient de travail 20. Les déflecteurs 40 forment ainsi des nervures sur le fond 21.

La série de déflecteurs 40 est entourée par une série d'autres déflecteurs 50. Les autres déflecteurs 50 sont agencés sur le fond 21 du récipient de travail 20. D'autres passages latéraux 51 sont ménagés entre les autres déflecteurs 50.

Tel que représenté sur les figures 3 à 6, la série d'autres déflecteurs 50 comporte dix autres déflecteurs 50. Le nombre de déflecteurs 40 est identique au nombre d'autres déflecteurs 50. Les autres déflecteurs 50 sont équidistants et de forme identique. Chacun des autres déflecteurs 50 présente un bord d'attaque interne 52. Les bords d'attaque internes 52 des autres déflecteurs 50 sont agencés en regard des passages latéraux 41. Les autres déflecteurs 50 présentent chacun une section augmentant à partir du bord d'attaque interne 52. Les autres déflecteurs 50 sont non coupants.

Les autres déflecteurs 50 sont également issus du fond 21 du récipient de travail 20. Les autres déflecteurs 50 forment aussi des nervures sur le fond 21.

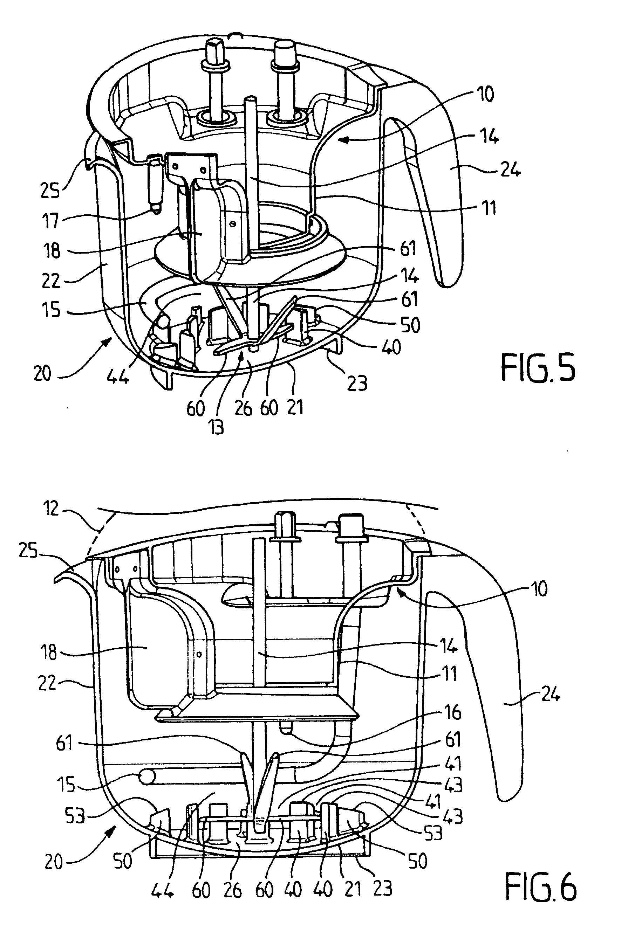

Les figures 5 et 6 illustrent la partie inférieure 11 du bloc moteur 10 (représenté partiellement) montée sur le récipient de travail 20. L'élément chauffant plongeant 15 s'étend dans le récipient de travail 20.

Les déflecteurs 40 présentent des sommets 43 s'étendant à distance de la partie inférieure 11 du bloc moteur 10. Ainsi les sommets 43 ménagent un passage supérieur 44 avec la partie inférieure 11 du bloc moteur 10. Les déflecteurs 40 entourent une partie concave 26 du fond 21 du récipient de travail 20. Les autres déflecteurs 50 présentent des parois supérieures 53 s'étendant aussi à distance de la partie inférieure 11 du bloc moteur 10. Les parois supérieures 53 des autres déflecteurs 50 sont de plus inclinées vers le bas en direction de la périphérie et s'élèvent à une altitude plus faible que les sommets 43 des déflecteurs 40. Le fond 21 du récipient de travail 20 est concave et présente une courbure raccordée à la paroi latérale 22 du récipient de travail 20.

L'outil de travail rotatif 13 comporte des lames 60 entourées par la série de déflecteurs 40 agencés sur le fond 21 du récipient de travail 20. Les lames 60 sont par exemple au nombre de deux. Les lames 60 peuvent être planes.

L'outil de travail rotatif 13 comporte d'autres lames 61 inclinées vers le haut à partir de l'axe 14. Les autres lames 61 sont par exemple inclinées de 60° par rapport au plan de l'axe 14. Les autres lames 61 sont par exemple au nombre de deux. Les autres lames 61 peuvent être rectilignes. Les autres lames 61 s'étendent au moins partiellement au dessus des sommets 43 des déflecteurs 40. Les lames 60 et les autres lames 61 sont avantageusement simplement chanfreinées.

La partie inférieure 11 du bloc moteur 10 s'étend dans le récipient de travail 20 à distance de la paroi latérale 22 du récipient de travail 20. La partie inférieure 11 du bloc moteur 10 présente une nervure latérale 18 s'étendant dans le récipient de travail 20 à distance de la paroi latérale 22 du récipient de travail 20. La nervure latérale 18 est agencée en amont du bec verseur 25 par rapport au sens de rotation de l'outil de travail rotatif 13.

L'appareil selon l'invention fonctionne et s'utilise de la manière suivante.

L'utilisateur verse l'eau et les graines de soja dans le récipient de travail 20, met en place le bloc moteur 10 sur le récipient de travail 20, et met en marche l'appareil. Les lames 60 éjectent les graines de soja et le liquide vers les déflecteurs 40 et les passages latéraux 41. Les déflecteurs 40 permettent de retenir une partie des graines de soja ou des morceaux de graines de soja et favorisent ainsi le broyage des graines de soja par les lames 60. Les lames 60, les passages latéraux 41 et le fond 21 concave du récipient de travail 20 favorisent la remontée de la préparation vers la paroi latérale 22 du récipient de travail 20. Les déflecteurs 40 et les autres déflecteurs 50 favorisent le brassage de la préparation. Les autres lames 61 tendent à aspirer la préparation vers le centre et le fond 21 du récipient de travail 20 et à rejeter la préparation sur les lames 60 à l'intérieur de la série de déflecteurs 40. Un mouvement toroïdal est ainsi obtenu dans le récipient de travail 20.

La nervure latérale 18 de la partie inférieure 11 du bloc moteur 10 permet d'éviter la sortie de préparation par le bec verseur 25.

La chauffe de la préparation par l'élément chauffant plongeant 15 peut entraîner la formation de mousse. Le capteur de détection de mousse agencé dans la sonde courte 17 peut permettre de couper l'alimentation de l'élément chauffant plongeant 15.

L'appareil selon l'invention est ainsi particulièrement compact et simple à utiliser. L'absence de parties coupantes sur l'outil de travail rotatif 13, sur les déflecteurs 40 et sur les autres déflecteurs 50 permet de faciliter la manipulation de l'appareil ainsi que le nettoyage de l'appareil.

A titre de variante, la série de déflecteurs 40 peut notamment comporter entre trois et seize déflecteurs 40.

A titre de variante, les déflecteurs 40 ne sont pas nécessairement issus du fond 21 du récipient de travail 20.

A titre de variante, la série d'autres déflecteurs 50 peut notamment comporter entre trois et seize autres déflecteurs 50.

A titre de variante, les autres déflecteurs 50 ne sont pas nécessairement issus du fond 21 du récipient de travail 20.

A titre de variante, la nervure latérale 18 de la partie inférieure 11 du bloc moteur 10 n'est pas nécessairement associée à un appareil dans lequel des lames de l'outil de travail sont entourées par une série de déflecteurs agencés sur le fond du récipient de travail. La nervure latérale 18 de la partie inférieure 11 du bloc moteur 10 peut être utilisée dans un appareil de préparation culinaire, notamment un appareil pour la préparation de lait de soja, dans lequel la partie inférieure 11 du bloc moteur 10 s'étend dans le récipient de travail 20 à distance de la paroi latérale 22, la nervure latérale 18 étant agencée de manière préférée en amont du bec verseur 25 par rapport au sens de rotation de l'outil de travail rotatif 13.

A titre de variante, les lames 60 et/ou les autres lames 61 ne sont pas nécessairement au nombre de deux. L'outil de travail rotatif 13 peut notamment comporter entre deux et quatre lames 60 et/ou entre deux et quatre autres lames 61.

La présente invention n'est nullement limitée à l'exemple de réalisation décrit, mais englobe de nombreuses modifications dans le cadre des revendications.

## Revendications

1. Appareil de préparation culinaire, notamment appareil pour la préparation de lait de soja, comportant un bloc moteur (10) disposé sur un récipient de travail (20) présentant un fond (21) et une paroi latérale (22), un outil de travail rotatif (13) étant monté sur un axe (14) issu d'une partie inférieure (11) du bloc moteur (10), l'outil de travail rotatif (13) comportant des lames (60) entourées par une série de déflecteurs (40) agencés sur le fond (21) du récipient de travail (20), des passages latéraux (41) étant ménagés entre les déflecteurs (40), **caractérisé en ce que** les déflecteurs (40) présentent des sommets (43) ménageant un passage supérieur (44) avec la partie inférieure (11) du bloc moteur (10) et **en ce que** l'outil de travail rotatif (13) comporte d'autres lames (61) inclinées vers le haut à partir de l'axe (14), lesdites autres lames (61) s'étendant au moins partiellement au dessus des sommets (43) des déflecteurs (40).

2. Appareil de préparation culinaire selon la revendication 1, **caractérisé en ce que** les déflecteurs (40) sont issus du fond (21) du récipient de travail (20).

3. Appareil de préparation culinaire selon l'une des revendications 1 ou 2, **caractérisé en ce que** les déflecteurs (40) entourent une partie concave (26) du fond (21) du récipient de travail (20).

4. Appareil de préparation culinaire selon l'une des revendications 1 à 3, **caractérisé en ce que** le fond (21) du récipient de travail (20) est concave et présente une courbure raccordée à la paroi latérale (22) du récipient de travail (20).

5. Appareil de préparation culinaire selon l'une des revendications 1 à 4, **caractérisé en ce que** la série de déflecteurs (40) comporte entre trois et seize déflecteurs.

6. Appareil de préparation culinaire selon l'une des revendications 1 à 5, **caractérisé en ce que** chacun des déflecteurs (40) présente un bord d'attaque latéral (42).

7. Appareil de préparation culinaire selon la revendication 6, **caractérisé en ce que** les déflecteurs (40) présentent chacun une section augmentant à partir du bord d'attaque latéral (42).

8. Appareil de préparation culinaire selon l'une des revendications 1 à 7, **caractérisé en ce que** la série de déflecteurs (40) est entourée par une série d'autres déflecteurs (50) et **en ce que** d'autres passages latéraux (51) sont ménagés entre les autres déflecteurs (50).

9. Appareil de préparation culinaire selon la revendication 8, **caractérisé en ce que** les autres déflecteurs (50) sont issus du fond (21) du récipient de travail (20). -

10. Appareil de préparation culinaire selon l'une des revendications 8 ou 9, **caractérisé en ce que** chacun des autres déflecteurs (50) présente un bord d'attaque interne (52).

11. Appareil de préparation culinaire selon la revendication 10, **caractérisé en ce que** les bords d'attaque internes (52) des autres déflecteurs (50) sont agencés en regard des passages latéraux (41).

12. Appareil de préparation culinaire selon l'une des revendications 8 à 11, **caractérisé en ce que** la série d'autres déflecteurs (50) comporte entre trois et seize autres déflecteurs (50).

13. Appareil de préparation culinaire selon l'une des revendications 8 à 12, **caractérisé en ce que** le nombre de déflecteurs (40) est identique au nombre d'autres déflecteurs (50).

14. Appareil de préparation culinaire selon l'une des revendications 1 à 13, **caractérisé en ce que** l'outil de travail rotatif (13) est non coupant.

15. Appareil de préparation culinaire selon l'une des revendications 1 à 14, **caractérisé en ce que** le récipient de travail (20) comporte un bec verseur (25).

16. Appareil de préparation culinaire selon l'une des revendications 1 à 15, **caractérisé en ce que** la partie inférieure (11) du bloc moteur (10) s'étend dans le récipient de travail (20) à distance de la paroi latérale (22) du récipient de travail (20).

17. Appareil de préparation culinaire selon la revendication 16, **caractérisé en ce que** la partie inférieure (11) du bloc moteur (10) présente une nervure latérale (18) s'étendant dans le récipient de travail (20) à distance de la paroi latérale (22) du récipient de travail (20).

18. Appareil de préparation culinaire selon la revendication 15 et la revendication 17, **caractérisé en ce que** la nervure latérale (18) est agencée en amont du bec verseur (25) par rapport au sens de rotation de l'outil de travail rotatif (13).

19. Appareil de préparation culinaire selon l'une des revendications 1 à 18, **caractérisé en ce qu'**il comporte des moyens de chauffe (30).

20. Appareil de préparation culinaire selon la revendication 19, **caractérisé en ce que** les moyens de chauffe (30) sont formés par un élément chauffant plongeant (15) issu de la partie inférieure (11) du bloc moteur (10).

## Claims

1. An appliance for preparing food, in particular an appliance for preparing soy milk, comprising a motor unit (10) arranged on a processing container (20) having a bottom (21) and a side wall (22), a rotary processing tool (13) mounted on a shaft (14) extending from a lower portion (11) of the motor unit (10), the rotary processing tool (13) including blades (60) surrounded by a series of deflectors (40) arranged at the bottom (21) of the processing container (20), and lateral passages (41) provided between the deflectors (40), **characterised in that** the deflectors (40) have tops (43) forming an upper passage (44) along with the lower portion (11) of the motor unit (10) and **in that** the rotary processing tool (13) includes other blades (61) inclined upwards from the shaft (14), said other blades (61) extending at least partially above the tops (43) of the deflectors (40).

2. An appliance for preparing food according to claim 1, **characterised in that** the deflectors (40) extend from the bottom (21) of the processing container (20).

3. An appliance for preparing food according to one of claims 1 or 2, **characterised in that** the deflectors (40) surround a concave portion (26) of the bottom (21) of the processing container (20).

4. An appliance for preparing food according to one of claims 1 to 3, **characterised in that** the bottom (21) of the processing container (20) is concave and has a curvature connected to the side wall (22) of the processing container (20).

5. An appliance for preparing food according to one of claims 1 to 4, **characterised in that** the series of deflectors (40) includes between three and sixteen deflectors.

6. An appliance for preparing food according to one of claims 1 to 5, **characterised in that** each of the deflectors (40) has a lateral leading edge (42).

7. An appliance for preparing food according to claim 6, **characterised in that** the deflectors (40) each have a cross-section which increases from the lateral leading edge (42).

8. An appliance for preparing food according to one of claims 1 to 7, **characterised in that** the series of deflectors (40) is surrounded by a series of other deflectors (50) and **in that** other lateral passages (51) are provided between the other deflectors (50).

9. An appliance for preparing food according to claim 8, **characterised in that** the other deflectors (50) extend from the bottom (21) of the processing container (20).

10. An appliance for preparing food according to one of claims 8 or 9, **characterised in that** each of the other deflectors (50) has an internal leading edge (52).

11. An appliance for preparing food according to claim 10, **characterised in that** the internal leading edges (52) of the other deflectors (50) are arranged opposite the lateral passages (41).

12. An appliance for preparing food according to one of claims 8 to 11, **characterised in that** the series of other deflectors (50) includes between three and sixteen other deflectors (50).

13. An appliance for preparing food according to one of claims 8 to 12, **characterised in that** the number of deflectors (40) is identical to the number of other deflectors (50).

14. An appliance for preparing food according to one of claims 1 to 13, **characterised in that** the rotary processing tool (13) is non-cutting.

15. An appliance for preparing food according to one of claims 1 to 14, **characterised in that** the processing container (20) contains a pouring spout (25).

16. An appliance for preparing food according to one of claims 1 to 15, **characterised in that** the lower portion (11) of the motor unit (10) extends into the processing container (20) at a distance from the side wall (22) of the processing container (20).

17. An appliance for preparing food according to claim 16, **characterised in that** the lower portion (11) of the motor unit (10) has a lateral groove (18) extending into the processing container (20) at a distance from the side wall (22) of the processing container (20).

18. An appliance for preparing food according to claim 15 and claim 17, **characterised in that** the lateral groove (18) is arranged upstream of the pouring spout (25) with respect to the direction of rotation of the rotary processing tool (13).

19. An appliance for preparing food according to one of claims 1 to 18, **characterised in that** it includes heating means (30).

20. An appliance for preparing food according to claim 19, **characterised in that** the heating means (30) is formed by an immersion heating element (15) extending from the lower portion (11) of the motor unit (10).

## Patentansprüche

1. Gerät für kulinarische Zubereitungen, insbesondere Gerät für die Zubereitung von Sojamilch, umfassend einen Motorblock (10), der auf einem Arbeitsbehälter (20) angeordnet ist, der einen Boden (21) und eine Seitenwand (22) aufweist, wobei ein drehendes Arbeitswerkzeug (13) auf einer Achse (14) befestigt ist, die aus einem unteren Teil (11) des Motorblocks (10) hervorgeht, wobei das drehende Arbeitswerkzeug (13) Klingen (60) umfasst, die von einer Reihe von Abweisern (40) umgeben sind, die auf dem Boden (21) des Arbeitsbehälters (20) angeordnet sind, wobei seitliche Durchgänge (41) zwischen den Abweisern (40) ausgebildet sind, **dadurch gekennzeichnet, dass** die Abweiser (40) Oberseiten (43) aufweisen, die einen oberen Durchgang (44) mit dem unteren Teil (11) des Motorblocks (10) ausbilden, und dadurch, dass das drehende Arbeitswerkzeug (13) andere Klingen (61) umfasst, die von der Achse (14) ausgehend nach oben geneigt sind, wobei sich die anderen Klingen (61) wenigstens teilweise über die Oberseiten (43) der Abweiser (40) erstrecken.

2. Gerät für kulinarische Zubereitungen nach Anspruch 1, **dadurch gekennzeichnet, dass** die Abweiser (40) aus dem Boden (21) des Arbeitsbehälters (20) hervorgehen.

3. Gerät für kulinarische Zubereitungen nach einem der Ansprüche 1 oder 2, **dadurch gekennzeichnet, dass** die Abweiser (40) einen konkaven Teil (26) des Bodens (21) des Arbeitsbehälters (20) umgeben.

4. Gerät für kulinarische Zubereitungen nach einem der Ansprüche 1 bis 3, **dadurch gekennzeichnet, dass** der Boden (21) des Arbeitsbehälters (20) konkav ist und eine Krümmung aufweist, die an die Seitenwand (22) des Arbeitsbehälters (20) angefügt ist.

5. Gerät für kulinarische Zubereitungen nach einem der Ansprüche 1 bis 4, **dadurch gekennzeichnet, dass** die Reihe von Abweisern (40) zwischen drei und sechzehn Abweiser umfasst.

6. Gerät für kulinarische Zubereitungen nach einem der Ansprüche 1 bis 5, **dadurch gekennzeichnet, dass** jeder der Abweiser (40) eine seitliche Angriffsfläche (42) aufweist.

7. Gerät für kulinarische Zubereitungen nach Anspruch 6, **dadurch gekennzeichnet, dass** die Abweiser (40) jeweils einen Querschnitt aufweisen, der ausgehend von der seitlichen Angriffsfläche (42) immer größer wird.

8. Gerät für kulinarische Zubereitungen nach einem der Ansprüche 1 bis 7, **dadurch gekennzeichnet, dass** die Reihe von Abweisern (40) von einer Reihe von anderen Abweisern (50) umgeben ist, und dadurch, dass andere seitliche Durchgänge (51) zwischen den anderen Abweisern (50) ausgebildet sind.

9. Gerät für kulinarische Zubereitungen nach Anspruch 8, **dadurch gekennzeichnet, dass** die anderen Abweiser (50) aus dem Boden (21) des Arbeitsbehälters (20) hervorgehen.

10. Gerät für kulinarische Zubereitungen nach einem der Ansprüche 8 oder 9, **dadurch gekennzeichnet, dass** jeder der anderen Abweiser (50) eine innenliegende Angriffsfläche (52) aufweist.

11. Gerät für kulinarische Zubereitungen nach Anspruch 10, **dadurch gekennzeichnet, dass** die innenliegenden Angriffsflächen (52) der anderen Abweiser (50) gegenüber den seitlichen Durchgängen (41) angeordnet sind.

12. Gerät für kulinarische Zubereitungen nach einem der Ansprüche 8 bis 11, **dadurch gekennzeichnet, dass** die Reihe der anderen Abweiser (50) zwischen drei und sechzehn andere Abweiser (50) umfasst.

13. Gerät für kulinarische Zubereitungen nach einem der Ansprüche 8 bis 12, **dadurch gekennzeichnet, dass** die Anzahl der Abweiser (40) gleich ist wie die Anzahl der anderen Abweiser (50).

14. Gerät für kulinarische Zubereitungen nach einem der Ansprüche 1 bis 13, **dadurch gekennzeichnet, dass** das drehende Arbeitswerkzeug (13) nicht schneidend ist.

15. Gerät für kulinarische Zubereitungen nach einem der Ansprüche 1 bis 14, **dadurch gekennzeichnet, dass** der Arbeitsbehälter (20) eine Ausgusstülle (25) umfasst.

16. Gerät für kulinarische Zubereitungen nach einem der Ansprüche 1 bis 15, **dadurch gekennzeichnet, dass** sich der untere Teil (11) des Motorblocks (10) in den Arbeitsbehälter (20) beabstandet von der Seitenwand (22) des Arbeitsbehälters (20) erstreckt.

17. Gerät für kulinarische Zubereitungen nach Anspruch 16, **dadurch gekennzeichnet, dass** der untere Teil (11) des Motorblocks (10) eine seitliche Rippe (18) aufweist, die sich in den Arbeitsbehälter (20) beabstandet von der Seitenwand (22) des Arbeitsbehälters (20) erstreckt.

18. Gerät für kulinarische Zubereitungen nach Anspruch 15 und Anspruch 17, **dadurch gekennzeichnet, dass** die seitliche Rippe (18) in Bezug auf die Drehrichtung des drehenden Arbeitswerkzeuges (13) der Ausgusstülle (25) vorgelagert ist.

19. Gerät für kulinarische Zubereitungen nach einem der Ansprüche 1 bis 18, **dadurch gekennzeichnet, dass** es Heizmittel (30) umfasst.

20. Gerät für kulinarische Zubereitungen nach Anspruch 19, **dadurch gekennzeichnet, dass** die Heizmittel (30) von einem Tauchheizelement (15) gebildet werden, das aus dem unteren Teil (11) des Motorblocks (10) hervorgeht.
